# EUROPÄISCHE PATENTSCHRIFT

(11) **EP 0 471 942 B1**
(45) Veröffentlichungstag und Bekanntmachung des Hinweises auf die Patenterteilung: **22.09.1993**
(21) Anmeldenummer: 91110082.4
(22) Anmeldetag: 19.06.1991
(51) Int. Cl.: A47J 47/14

(54) **Transport- und Warmhaltebehälter für warme Fertiggerichte**
Container with heat retention characteristics for holding hot food
Récipient conservateur de chaleur pour le transport de plats préparés chauds

(30) Priorität: 14.08.1990 DE 4025762
(43) Veröffentlichungstag der Anmeldung: 26.02.1992
(73) Patentinhaber: TMT TECHNO MARKETING TEAM GmbH, W-8000 München 81 (DE)
(72) Erfinder: TMT TECHNO MARKETING TEAM GmbH, W-8000 München 81 (DE)
(74) Vertreter: Strasser, Wolfgang, Dipl.-Phys

(56) Entgegenhaltungen:
- EP-A- 0 413 605
- US-A- 2 486 178
- US-A- 4 806 736
- US-A- 4 830 190
- US-A- 4 883 195

## Beschreibung

Die Erfindung betrifft einen Transport- und Warmhaltebehälter für warme Fertiggerichte, insbesondere für Pizzas, bei dem wenigstens ein Teil der Wände des Behälters wärmedämmend ausgebildet ist.

Ein derartiger Behälter ist aus der US-A-4 806 736 bekannt.

Derartige Behälter werden beispielsweise von Pizzabäckereien verwendet, die auf telefonische Bestellung Pizzas anfertigen und sodann dem Besteller ins Haus liefern.

Die fertig gebackenen Pizzas werden dabei in der Bäckerei von dem jeweiligen Backblech abgenommen und meist einzeln in wärmedämmende Behälter aus Pappe eingelegt, in denen sie auch zum Kunden transportiert und diesem übergeben werden. Derartige Transport- und Warmhaltebehälter erweisen sich in der Praxis als verhältnismäßig kostspielig, da sie ja nur einmal verwendet werden, und zudem als umweltbelastend, da sie als Abfall entsorgt werden müssen. Darüber hinaus ergibt sich das Problem, daß sich im Inneren des geschlossenen Transportbehälters aus Pappe aus der heißen, Feuchtigkeit enthaltenden Pizza heraus eine feuchtigkeitsgesättigte Atmosphäre bildet, die den gewünscht knusprigen Teigboden der Pizza aufweicht und so den Genußwert beeinträchtigt.

Die der Erfindung zugrundeliegende Aufgabe besteht somit darin, einen Transport- und Warmhaltebehälter der eingangs genannten Art zu schaffen, bei dem eine Geschmacks- und Genußbeeinträchtigung der darin transportierten und warmgehaltenen Fertiggerichte durch aus diesen entweichenden Wasserdampf vermieden wird.

Gemäß der Erfindung wird diese Aufgabe bei einem Behälter der eingangs genannten Art dadurch gelöst, daß im Bereich eines unteren Seitenrands des Behälters eine Zutrittsöffnung für Umgebungsluft geformt ist, daß im Bereich eines oberen Seitenrands des Behälters eine Austrittsöffnung für Luft aus dem Innenraum des Behälters geformt ist, und daß wenigstens ein Teil einer Seitenwand des Behälters aus gut wärmeleitendem Material besteht.

Durch diese erfindungsgemäße Ausgestaltung wird erreicht, daß in den beispielsweise Pizzas enthaltenden Behälter durch die untere Zutrittsöffnung kalte, trockene Umgebungsluft angesaugt wird, die im Inneren des Behälters über die warme, Wasserdampf abgebende Pizza hinwegstreicht und die Feuchtigkeit aufnimmt, mitführt und schließlich aus der oberen Austrittsöffnung des Behälters an die Umgebung entweicht. Auf ihrem Weg zur Austrittsöffnung hin prallt die feuchtigkeitsgesättigte Luft auf einen Teil der Seitenwand des Behälters, der aus gut wärmeleitendem Material besteht und daher auf Umgebungstemperatur gehalten ist, so daß er für die an ihm vorbeistreichende feuchtigkeitsgesättigte Luft als Kondensfalle wirkt, an der sich zumindest ein nennenswerter Teil der in der Luft mitgeführten Feuchtigkeit als Kondensat niederschlägt. Dieses Kondensat kann bei genügender Menge nach unten aus der Austrittsöffnung heraus abgeführt werden.

Auf diese Weise wird erreicht, daß das Entstehen einer feuchtigkeitsgesättigen Atmosphäre im Innenraum des Behälters vermieden wird, obgleich die warmzuhaltende feuchte Pizza fortwährend Feuchtigkeit abgibt. Es ist somit gewährleistet, daß der knusprige Boden der Pizza bis zum Eintreffen beim Kunden und auch über eine längere Warmhaltezeit hinweg knusprig bleibt und eine Genuß- bzw. Geschmacksbeeinträchtigung nicht eintritt.

Von Vorteil ist ferner, daß der erfindungsgemäße Behälter viele Male wiederverwendet werden kann, so daß die Kosten gering gehalten werden und ein umweltbelastender Abfall wie beim Stand der Technik gar nicht erst entsteht. Von Vorteil ist ferner, daß der erfindungsgemäße Behälter zur Aufnahme mehrerer gleichartiger oder verschiedener Fertiggerichte ausgebildet werden kann, beispielsweise für den Transport von drei Pizzas.

Bei einer bevorzugten Ausführungsform der Erfindung ist vorgesehen, daß die zwischen Zutrittsöffnung und Austrittsöffnung liegende Seitenwand des Behälters als aus Metallblech geformte Tür ausgebildet ist, und daß zwischen dem unteren Rand der Tür und der benachbarten unteren Wand des Behälters zur Bildung der Zutrittsöffnung und zwischen dem oberen Rand der Tür und der benachbarten oberen Wand des Behälters zur Bildung der Austrittsöffnung in der geschlossenen Stellung der Tür jeweils ein Spalt geformt ist. Bei dieser Ausgestaltung erreicht man einen großen Durchgangsquerschnitt der Zutrittsöffnung und der Austrittsöffnung, ohne daß insgesamt die geschlossene Form des Behälters durch klaffende Öffnungen beeinträchtigt wird. Vorteilhaft ist dabei auch, daß zur Bildung der Zutrittsöffnung und der Austrittsöffnung lediglich die ohnedies erforderliche Zugangstür des Behälters mit entsprechendem Abstand zu den jeweiligen Teilen der zu verschließenden Türöffnung ausgebildet wird, so daß zusätzliche Maßnahmen nicht erforderlich sind sondern die ohnedies stets gegebenen Fertigkeitstoleranzen zur Bildung der Öffnungen gezielt ausgenutzt werden.

Von Vorteil ist es auch, wenn die wärmedämmenden Wände des Behälters doppelwandig aus Metallblech mit Zwischenlage eines isolierenden wärmedämmenden Materials geformt sind. Durch die doppelwandige Ausbildung erreicht man auf beiden Seiten der wärmedämmenden Wände glatte abwaschbare und daher hygienisch sauberhaltbare Oberflächen, wie sie für die Handhabung von Lebensmitteln stets wünschenswert sind. Gleichzeitig wird durch die doppelwandige Ausgestaltung mit Zwischenlage des wärmedämmenden Materials ein sehr guter wärmedämmender Effekt erzielt.

Bevorzugt ist es, daß das Metallblech der Tür und das Metallblech der wärmedämmenden Wände aus Aluminium oder einer Aluminiumlegierung bestehen. Bei dieser Materialwahl ergibt sich eine leicht sauberzuhaltende Oberfläche der Wände und zudem wegen der guten wärmeleitenden Eigenschaften von Aluminium eine gute Kühlwirkung der Tür, die zur wirksamen Abscheidung der Feuchtigkeit als Kondensat erforderlich ist.

Bevorzugt ist ferner, daß auf der Innenseite der Bodenwand des Behälters ein Block aus wärmespeicherndem Material, wie Metall, angeordnet ist. Ein derartiger Block läßt sich vor der Benutzung, d.h. vor dem Einfüllen der warmzuhaltenden Speisen in geeigneter Weise aufheizen, so daß zusätzlich zu der ohnedies isolierenden Wirkung des Behälters durch die gespeicherte Wärme ein besonders wirksames Warmhalten der Speisen gewährleistet wird.

Vorteilhafterweise sieht man dabei vor, daß der Block mit einem elektrischen Heizelement versehen ist. Dadurch ist es möglich, den Block vor dem Einsetzen der Pizzas ohne Verschmutzung auf die gewünschte Temperatur zu bringen, wobei die Verwendung eines elektrischen Heizelements eine besonders genaue Überwachung der Temperatur mittels eines Thermometers oder durch Vorbestimmen der Aufheizzeitspanne gestattet.

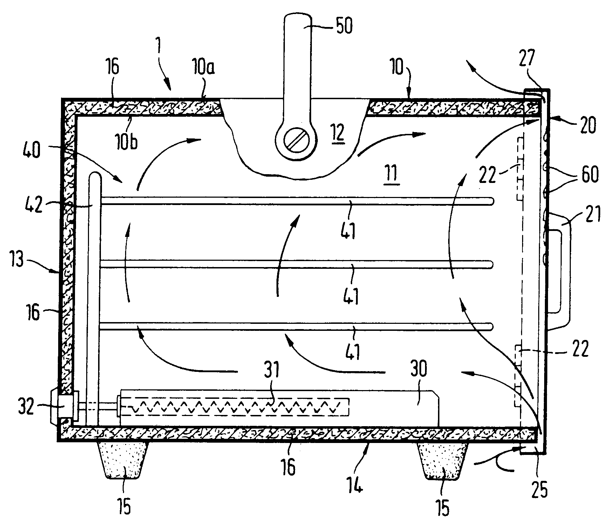

Die Erfindung wird im folgenden beispielsweise unter Bezugnahme auf die Zeichnung näher erläutert; die einzige Figur der Zeichnung zeigt im vertikalen Teilschnitt einen Transport- und Warmhaltebehälter für Pizzas.

Wie die Zeichnung zeigt, ist der insgesamt mit dem Bezugszeichen 1 bezeichnete Behälter nach Art eines rechteckigen Kastens aus den Seitenwänden 11 und 12, der hinteren Seitenwand 13, der oberen Wand 10, der Bodenwand 14 und der Tür 20 aufgebaut. An der Unterseite der Bodenwand 14 sind mehrere, beispielsweise als Gummipuffer ausgebildete Stützfüße 15 angebracht, um beim Abstellen des Behälters eine Beschädigung der Unterlage zu verhindern.

Die Wände 10 bis 14 sind fest und lückenfrei miteinander verbunden. Wie in der Zeichnung gezeigt ist, besteht die obere Wand 10 aus im Abstand zueinander angeordneten Blechtafeln 10a und 10b, die beispielsweise aus Aluminium oder einer Aluminiumlegierung bestehen, zwischen denen ein wärmedämmendes Material 16 eingeschichtet ist. Das wärmedämmende Material 16 kann beispielsweise ein Kunststoffschaum, wie geschäumtes Polystyrol oder Polyurethanschaum, oder eine Mineralfaserwolle sein. Der aus den Wänden 10 bis 14 gebildete Teil des Behälters 1 ist somit seiner Beschaffenheit nach speziell für eine gute Wärmedämmung gegenüber der Umgebungsatmosphäre ausgebildet.

Zur Erleichterung des Transports ist im oberen Bereich der Seitenwände 11 und 12 ein schwenkbarer Tragebügel 50 angelenkt.

Im Inneren des Behälters 1 ist auf der Bodenwand 14 ein Block 30 aus wärmespeicherndem Material, wie beispielsweise einem Metall, insbesondere Aluminium oder Kupfer, angebracht. Innerhalb dieses Blocks 30 ist ein Heizelement 31 angeordnet, das über geeignete Leitungen mit einer Steckbuchse 32 in der Rückwand 13 des Behälters 1 verbunden ist.

Ferner ist im Innenraum des Behälters 1 eine Halterung 40 für mehrere Pizzas vorgesehen, die aus einem auf der Bodenwand 14 aufliegenden Ständer 42 und hiervon horizontal wegragenden Tragstäben 41 besteht. Die Tragstäbe sind im horizontalen und vertikalen Abstand zueinander derart angeordnet, daß jeweils auf einem Paar dieser Tragstäbe 41 eine Pizza abgelegt werden kann.

Wie in der Zeichnung gezeigt ist, ist die Tür 20 an der Seitenwand 11 mittels der Scharniere 22 um eine vertikale Achse derart schwenkbar angelenkt, daß sie im aufgeschwenkten Zustand ein unbehindertes Einführen bzw. Herausnehmen der Pizza gestattet. Zum Erleichtern der Türbetätigung ist an der Außenseite der Tür 20 ein Türgriff 21 angebracht.

Anders als die Wände 10 bis 14 ist die Tür 20 nicht wärmeisolierend ausgebildet. Sie besteht aus einem Metallblechpaneel, vorzugsweise aus Aluminium, und ist derart geformt, daß ihr oberer und unterer horizontaler Rand im rechten Winkel zum Behälter 1 hin abgebogen ist, wobei zwischen dem zugewandten Rand der oberen Wand 10 und der Bodenwand 14 jeweils ein Spalt verbleibt. Der untere Spalt zwischen der Tür 20 und der Bodenwand 14 ist als Zutrittsöffnung 25 für Umgebungsluft ausgebildet, während der obere Spalt zwischen der oberen Wand 10 des Behälters 1 und der Tür 20 als Austrittsöffnung 27 für Luft aus dem Inneren des Behälters 1 dient. Die vertikalen Seitenränder der Tür 20 schließen jeweils eng an die benachbarten Ränder der Seitenwände 11 und 12 des Behälters 1 an.

Bei der Anwendung des Behälters 1 wird zunächst das Heizelement 31 über die Steckbuchse 32 mit einer geeigneten Stromquelle verbunden und so lange aufgeheizt, bis der Block 30 die gewünschte Temperatur erreicht hat. Die gewünschte Temperatur kann entweder mit einem an der Rückseite der Rückwand 13 des Behälters 1 angebrachten Thermometer überwacht werden oder ganz einfach dadurch bestimmt werden, daß die Aufheizung auf eine bestimmte Zeitspanne begrenzt wird.

In den nun vorgeheizten Behälter 1 werden die fertig gebackenen und warmen Pizzas eingeführt. Vorzugsweise werden die Pizzas auf ihren Backblechen bzw. Backformen auf den Tragstäben 41 der Halterung 40 abgelegt.

Während des Transports werden die Pizzas in dem Behälter dadurch warmgehalten, daß der wärmespeichernde Block 30 die Wärmeenergie ersetzt, die durch Verluste an die Umgebung verloren geht.

Besonders bedeutsam ist während dieser Benutzungsphase, daß von unten her durch die Zutrittsöffnung 25 an der Tür Umgebungsluft angesaugt wird, dann entlang der in der Zeichnung gezeigten Pfeile durch den Innenraum des Behälters 1 streicht und dabei Feuchtigkeit aufnimmt, die von der Pizza abgegeben wird. Die feuchtigkeitsgesättigte Luft entweicht dann nach oben durch die Austrittsöffnung 27 an die Umgebungsluft. Auf diesem Weg streicht die feuchtigkeitshaltige Luft an der als Kühlfläche ausgebildeten, nicht wärmeisolierenden Tür 20 vorbei, so daß die in der Luft mitgeführte Feuchtigkeit an der Innenseite der Tür in ihrem oberen Bereich auskondensiert, wie durch die Kondenstropfen 60 in der Zeichnung angezeigt. Diese Kondenstropfen können entlang der Innenseite der Tür 20 nach unten ablaufen und durch die Zutrittsöffnung 25 entweichen. Es wird auf diese Weise vermieden, daß die aus der warmen Pizza, insbesondere aus dem Belag auf ihrer Oberseite austretende Feuchtigkeit dazu führt, daß der knusprig gewünschte Teigboden der Pizza durch diese Feuchtigkeit erweicht wird.

Nach dem Transport werden die Pizzas auf ihren Backblechen bei geöffneter Tür 20 von den Tragstäben 41 der Halterung 40 soweit aus dem Behälter 1 herausgezogen, daß die einzelne Pizza mit einem geeigneten Pizzaheber von dem Backblech abgenommen und auf ein Geschirr des Empfängers abgelegt werden kann. Damit bei dem teilweisen Herausziehen die Backbleche nicht von den Tragstäben abkippen, können in dem der Türöffnung zugewandten Bereich der Tragstäbe 41 Permanentmagnete angebracht sein, die den auf den Tragstäben 1 verbleibenden Teil der Backbleche festhalten, so daß ein Abkippen vermieden wird.

## Patentansprüche

1. Transport- und Warmhaltebehälter für warme Fertiggerichte, insbesondere für Pizzas, bei dem wenigstens ein Teil der Wände (10 bis 14) des Behälters (1) wärmedämmend ausgebildet ist, dadurch **gekennzeichnet,** daß im Bereich eines unteren Seitenrands des Behälters (1) eine Zutrittsöffnung (25) für Umgebungsluft geformt ist, daß im Bereich eines oberen Seitenrands des Behälters (1) eine Austrittsöffnung für Luft aus dem Innenraum des Behälters (1) geformt ist, und daß wenigstens ein Teil (20) einer Seitenwand des Behälters (1) aus gut wärmeleitendem Material besteht.

2. Behälter nach Anspruch 1, dadurch **gekennzeichnet,** daß die zwischen Zutrittsöffnung (25) und Austrittsöffnung (27) liegende Seitenwand des Behälters (1) als aus Metallblech geformte Tür (20) ausgebildet ist, und daß zwischen dem unteren Rand der Tür (20) und der benachbarten unteren Wand (14) des Behälters (1) zur Bildung der Zutrittsöffnung (25) und zwischen dem oberen Rand der Tür (20) und der benachbarten oberen Wand (10) des Behälters (1) zur Bildung der Austrittsöffnung (27) in der geschlossenen Stellung der Tür (20) jeweils ein Spalt geformt ist.

3. Behälter nach Anspruch 1 oder 2, dadurch **gekennzeichnet,** daß die wärmedämmenden Wände (10 bis 14) des Behälters (1) doppelwandig (10a, 10b) aus Metallblech mit Zwischenlage eines isolierenden wärmedämmenden Materials (16) geformt sind.

4. Behälter nach Anspruch 2 oder 3, dadurch **gekennzeichnet,** daß das Metallblech der Tür (20) und das Metallblech der wärmedämmenden Wände (10 bis 13) aus Aluminium oder einer Aluminiumlegierung bestehen.

5. Behälter nach einem der vorhergehenden Ansprüche, dadurch **gekennzeichnet,** daß auf der Innenseite der Bodenwand (14) des Behälters (1) ein Block (30) aus wärmespeicherndem Material, wie Metall, angeordnet ist.

6. Behälter nach Anspruch 5, dadurch **gekennzeichnet,** daß der Block (30) mit einem elektrischen Heizelement (31) versehen ist.

## Claims

1. A container for keeping hot and transporting hot ready-to-eat meals, especially for pizzas, wherein at least some of the walls (10 to 14) of the container (1) are of a heat-barrier nature, characterized in that in the region of a lower side edge of the container (1) is formed an access opening (25) for ambient air, in the region of an upper side edge of the container (1) is formed an outlet opening for air from the interior of the container (1), and at least a part (20) of a sidewall of the container (1) is formed of a material which is a good conductor of heat.

2. A container according to claim 1, characterized in that the side wall of the container (1), which is disposed between the access opening (25) and the outlet opening (27) is in the form of a door (20) made from metal sheet, and a gap is formed betwen the lower edge of the door (20) and the adjacent lower wall (14) of the container (1) to form the access opening (25) and a gap is formed between the upper edge of the door (20) and the adjacent upper wall (10) of the container (1) to form the outlet opening (27), when the door (20) is in the closed position.

3. A container according to claim 1 or 2, characterized in that the heat-barrier walls (10 to 14) of the container (1) are formed as a double-wall structure (10a, 10b) from metal sheet with an intermediate layer of an insulating, heat-barrier material (16).

4. A container according to claim 2 or 3, characterized in that the metal sheet of the door (20) and the metal sheet of the heat-barrier walls (10 to 13) comprises aluminum or a an aluminum alloy.

5. A container according to any preceding claim, characterized in that on the inward side of the bottom wall (14) of the container (1) a block (30) of a heat-storage material, such as metal, is arranged.

6. A container according to claim 5, characterized in that the block (30) is provided with an electrical heating element (31).

## Revendications

1. Récipient de transport et de maintien au chaud pour des plats préparés chauds , notamment pour des pizzas, dans lequel au moins une partie des parois (10 à 14) du récipient (1) est réalisée de manière à être calorifuge, caractérisé en ce qu'une ouverture d'accès (25) pour l'air ambiant est ménagée dans la zone d'un bord latéral inférieur du récipient (1) , qu'une ouverture de sortie pour l'air hors de l'espace intérieur du récipient (1) est ménagée dans la zone d'un bord latéral supérieur du récipient (1) , et qu'au moins une partie (20) d'une paroi latérale du récipient (1) est réalisée en un matériau bon conducteur de la chaleur.

2. Récipient selon la revendication 1, caractérisé en ce que la paroi latérale du récipient (1) , située entre l'ouverture d'accès (25) et l'ouverture de sortie (27) est réalisée sous la forme d'une porte (20) constituée d'une tôle métallique et qu'une fente est ménagée chaque fois entre le bord inférieur de la porte (20) et la paroi inférieure voisine (14) du récipient (1) pour constituer l'ouverture d'accès (25), et entre le bord supérieur de la porte (20) et la paroi supérieure voisine (10) du récipient (1) pour constituer l'ouverture de sortie (27) , lorsque la porte (20) est fermée.

3. Récipient selon la revendication 1 ou 2, caractérisé en ce que les parois calorifuges (10 à 14) du récipient (1) sont réalisées sous la forme de parois doubles (10a, 10b) formées d'une tôle métallique et comportant un élément intercalaire formé d'un matériau calorifuge isolant (16).

4. Récipient selon la revendication 2 ou 3, caractérisé en ce que la tôle métallique de la porte (20) et la tôle métallique des parois calorifuges (10 à 13) sont constituées d'aluminium ou d'alliage d'aluminium.

5. Récipient selon une des revendications précédentes, caractérisé en ce que sur le côté intérieur de la paroi de fond (14) du récipient (1) , est agencé un bloc (30) en matériau accumulant la chaleur, tel que du métal.

6. Récipient selon la revendication 5, caractérisé en ce que le bloc (30) est pourvu d'un élément chauffant électrique (31).
